# EUROPÄISCHE PATENTANMELDUNG

(11) **EP 1 841 013 A1**
(43) Veröffentlichungstag der Anmeldung: **03.10.2007**
(21) Anmeldenummer: 06112004.4
(22) Anmeldetag: 30.03.2006
(51) Int. Cl.: H01R 12/22, H01R 25/14, F21S 8/06, F21V 21/002

(54) **Beleuchtungseinrichtung**

(71) Anmelder: Egger, Ueli, 6612 Ascona (CH)
(72) Erfinder: Egger, Ueli, 6612 Ascona (CH)
(74) Vertreter: Scheuzger, Beat Otto

(57) **Zusammenfassung**

Eine Beleuchtungseinrichtung (1) umfasst einen Transformator (10), elektrische Leiter (7,8) in welche ein eine niedrige Spannung aufweisender Strom einspeisbar ist und welche elektrischen Leiter (7 und 8) mit Trägern (13) verbindbar sind, an welchen Trägern (13) Beleuchtungskörper (25) angebracht sind, die mit den Trägern (13) elektrisch verbindbar sind. Die elektrischen Leiter sind aus Verbundplatten (5) gebildet, deren beide Deckplatten (7 und 8) aus einem elektrisch leitenden Material bestehen und die elektrischen Leiter bilden. Die beiden Deckplatten (7,8) sind auf einer elektrisch isolierenden Kernplatte (6) aufgebracht. Die Verbundplatten (5) sind zu einem Kanal (2) zusammengesetzt, welcher an Decken (4) und/oder Wänden befestigbar ist, in welchen der Transformator (10) unterbringbar ist und in welchem Öffnungen (11) angebracht sind, in welche die Träger (13) einsetzbar sind.

## Beschreibung

Die vorliegende Erfindung bezieht sich auf eine Beleuchtungseinrichtung, umfassend einen Transformator, elektrische Leiter, in welche ein eine niedrige Spannung aufweisender Strom einspeisbar ist, und welche elektrischen Leiter mit Trägern verbindbar sind, an welchen Trägern Beleuchtungskörper angebracht, die mit den Trägern elektrisch verbindbar sind.

Derartige Beleuchtungseinrichtungen sind bekannt. Insbesondere bekannt sind Niederspannungsbeleuchtungen, bei welchen ein Transformator vorgesehen ist, mit welchem der übliche Netzstrom in einen Strom mit niedriger Spannung umgewandelt wird, welcher Storm dann in zwei Leiter geführt wird, die als Kabel ausgebildet sind. Diese Kabel können beispielsweise nichtisolierte Drahtseile sein, welche mit Befestigungselementen beispielsweise an einer Decke eines Raums befestigt und gespannt werden können. An diese Kabel sind Beleuchtungskörper anhängbar, beispielsweise Spotleuchten, die an einer beliebigen Stelle an diese Kabel angehängt und gegebenenfalls befestigt werden können.

Derartige Einrichtungen haben den Nachteil, dass der Transformator sichtbar befestigt ist und/oder die Zuleitungen für diese Kabel frei sichtbar sind. Dies kann insbesondere in ästhetischer Hinsicht als nachteilig empfunden werden. Ebenfalls nicht immer passend für die Umgebung sind die freigeführten Kabel, an welchen die Beleuchtungskörper mit den entsprechenden Leitungszuführungen aufgehängt werden.

Die Aufgabe der vorliegenden Erfindung besteht nun darin, eine Beleuchtungseinrichtung zu schaffen, bei welcher die Stromzuführung ohne die Verwendung von Kabeln erfolgen kann, und bei welcher der Transformator vor Blicken geschützt angeordnet werden kann.

Erfindungsgemäss erfolgt die Lösung dieser Aufgabe dadurch, dass die elektrischen Leiter aus Verbundplatten gebildet sind, deren beide Deckplatten aus einem elektrisch leitenden Material bestehen und die elektrischen Leiter bilden, welche beiden Deckplatten auf einer elektrisch isolierenden Kernplatte aufgebracht sind, und dass die Verbundplatten zu einem Kanal zusammengesetzt sind, welcher an Decken und/oder Wänden befestigbar ist, in welchem der Transformator unterbringbar ist, und in welchem Öffnungen angebracht sind, in welche die Träger einsetzbar sind.

Mit dieser Anordnung wird eine Beleuchtungseinrichtung erhalten, bei welcher keine elektrischen Leitungen sichtbar sind, und bei welcher der Transformator ebenfalls nicht sichtbar angeordnet werden kann, wodurch die gewünschten ästhetischen Forderungen vollumfänglich erfüllt werden können. Zudem ist der Aufbau dieser Beleuchtungseinrichtung sehr einfach.

In einer vorteilhaften Ausgestaltung der Erfindung weisen die Kanäle jeweils einen Grundkörper auf, welcher aus einem elektrisch leitfähigen Material besteht, auf welchen die Verbundplatten aufgesetzt sind. Dadurch ergibt sich ein sehr einfacher Aufbau und eine einfach Montage dieser Kanäle.

In vorteilhafter Weise ist der Grundkörper aus einem Blech gebildet. Einerseits lässt sich dieses Blech sehr gut bearbeiten und formen, andererseits bildet dieses Blech zusammen mit der einen Deckplatte den einen elektrischen Leiter, es sind somit keine weiteren baulichen Massnahmen für die Stromzuführung in diesen elektrischen Leiter zu treffen.

Eine weitere vorteilhafte Ausgestaltung der Erfindung besteht darin, dass die Öffnungen in den Verbundplatten längsschlitzförmige Ausnehmungen sind. Einerseits sind diese einfach in den Verbundplatten anzubringen, andererseits hat man dann die Möglichkeit, die Träger an einem beliebigen Ort einzusetzen, wobei die Stromzuführung gewährleistet ist.

In vorteilhafter Weise sind die Träger aus einem Verbundplattenstück gebildet, deren eines Ende mit einem Adapter zum Einsetzen in die Öffnungen und zum Abnehmen des Stroms versehen ist, und auf deren anderes Ende ein Kupplungsstück aufsteckbar ist, an welchem der Beleuchtungskörper angeordnet ist. Dadurch erhält man auch im Träger des Beleuchtungskörpers keine Leitungen für den elektrischen Strom in Form von Kabeln.

In vorteilhafter Weise ist am Adapter ein Haltenocken angebracht, mit welchem eine sichere Halterung des Trägers mit dem Beleuchtungskörper in der Verbundplatte gewährleistet ist.

Eine weitere vorteilhafte Ausgestaltung der Erfindung besteht darin, dass das Verbundplattenstück biegbar ist. Dadurch können spezielle, ästhetisch ansprechende Formen für den Träger des Beleuchtungskörpers gebildet werden.

Eine weitere vorteilhafte Ausgestaltung der Erfindung besteht darin, dass die Verbundplatten und die Verbundplattenstücke eine Kernplatte aus Polyäthylen und Deckplatten aus einer Aluminiumlegierung umfassen. Derartige Verbundplatten sind im Markt erhältlich, beispielsweise unter der Bezeichnung "Alucobond" oder "Reynobond". Dadurch kann eine derartige Beleuchtungseinrichtung auch relativ günstig hergestellt werden.

Ausgestaltungen der Erfindung werden nachfolgend anhand der beiliegenden Zeichnungen beispielhaft näher erläutert.

Es zeigt
Figur 1 eine Schnittdarstellung einer erfindungsgemässen Beleuchtungseinrichtung, welche einen Kanal umfasst, der an der Decke befestigbar ist;
Figur 2 eine Ansicht auf eine Verbundplatte, die Bestandteil des Kanals gemäss Figur 1 ist, mit den darin angebrachten Öffnungen;
Figur 3 eine Schnittdarstellung einer weiteren Ausführungsform einer erfindungsgemässen Beleuchtungseinrichtung, mit einem Kanal, der an der Decke und an der Wand befestigt ist; und
Figur 4 eine Schnittdarstellung einer weiteren Ausführungsform der erfindungsgemässen Beleuchtungseinrichtung.

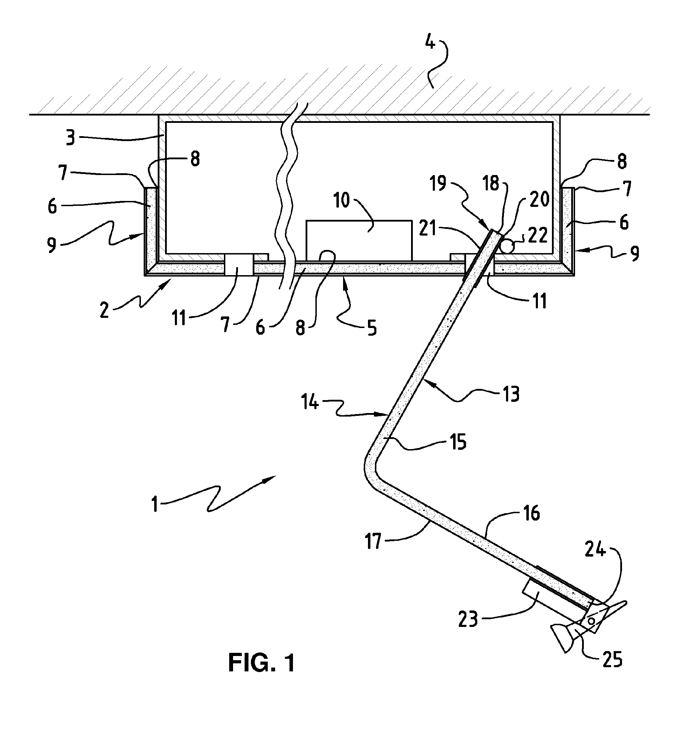

Wie aus Figur 1 ersichtlich ist, umfasst die erfindungsgemässe Beleuchtungseinrichtung 1 einen Kanal 2. Dieser Kanal 2 weist einen Grundkörper 3 auf, der aus einem Blech gebildet ist, das aus einem elektrisch leitfähigen Material, beispielsweise aus einer Aluminiumlegierung, besteht. Dieses Blech kann beispielsweise durch Abkanten oder sonstiger Verformung in ein nicht geschlossenes Vierkantprofil gebracht werden, wie dieses in Figur 1 dargestellt ist. Dieser Grundkörper 3 kann in bekannter Weise an der Decke 4 eines Raumes befestigt werden, beispielsweise durch Verschraubung.

An der Unterseite dieses Grundkörpers 3 ist eine Verbundplatte 5 befestigt. Diese Verbundplatte 5 umfasst eine elektrisch isolierende Kernplatte 6, die beispielsweise aus Polyäthylen besteht. Die Kernplatte ist beidseitig mit einer Deckplatte 7, 8 versehen, welche aus einem elektrisch leitenden Material besteht, beispielsweise aus einer Aluminiumlegierung. An den Seiten des Grundkörpers 3 ist jeweils eine weitere Verbundplatte 9 angeordnet, die ebenfalls aus einer Kernplatte 6 und zwei Deckplatten 7 und 8 zusammengesetzt ist. Das Zusammenfügen in den Eckbereichen 10 dieser Verbundplatte 5 mit den weiteren Verbundplatten 9 erfolgt so, dass jeweils die Deckplatten 7 und die Deckplatten 8 so miteinander verbunden sind, dass sie den elektrischen Strom leiten können.

Innenseitig im Kanal 2 ist ein Transformator 10 untergebracht, der in bekannter Weise mit dem üblichen Stromnetz verbunden ist. Niederspannungsseitig ist dieser Transformator 10 in bekannter Weise elektrisch verbunden mit der jeweiligen Deckplatte 7 und der jeweiligen Deckplatte 8 der Verbundplatte 5. Die Deckplatten 7 und 8 der Verbundplatte 5 und der weiteren Verbundplatten 9 bilden somit die elektrischen Leiter.

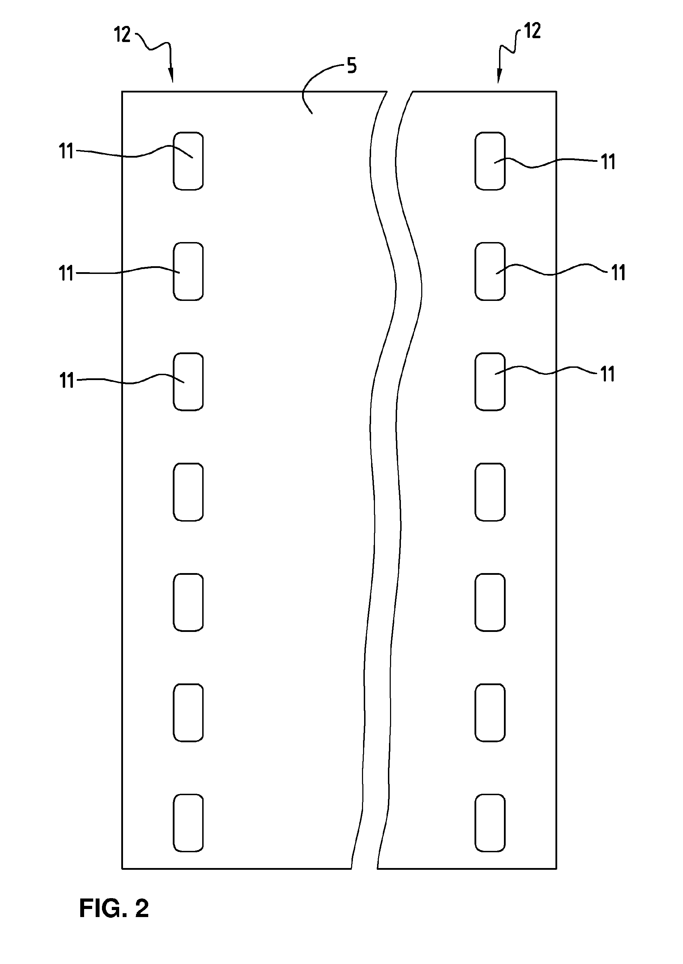

In der Verbundplatte 5 sind Öffnungen 11 angebracht. Diese Öffnungen 11 sind durchgehend, durchdringen somit auch im Ausführungsbeispiel, wie es in Figur 1 dargestellt ist, den Grundkörper 3. In der Verbundplatte 5 können mehrere Öffnungen 11 angebracht sein, beispielsweise in Reihen 12 ausgerichtet, wie dies aus Figur 2 ersichtlich ist. Die Öffnungen 11 sind als längsschlitzförmige Ausnehmungen ausgebildet, wie ebenfalls aus Figur 2 ersichtlich ist. Selbstverständlich wäre es auch denkbar, die Öffnungen anders auf der Verbundplatte 5 anzuordnen, als dies in Figur 2 dargestellt ist.

Wie aus Figur 1 ersichtlich ist, lässt sich in diese Öffnungen 11 ein Träger 13 einsetzen. Dieser Träger 13 besteht aus einem Verbundplattenstück 14, welches ebenfalls aus einem Kernplattenbereich 15, das aus einem elektrisch isolierenden Material besteht, und zwei Deckplatten 16 und 17 besteht, die aus elektrisch leitfähigem Material bestehen. Dieses Verbundplattenstück 14 ist mittig um etwa einen rechten Winkel abgebogen.

An einem Ende 18 dieses Verbundplattenstückes 14 ist ein Adapter 19 angebracht. Dieser Adapter 19 weist zwei elektrisch leitende Bereiche 20, 21 auf, wobei der eine Bereich 20 mit der einen Deckplatte 8 der Verbundplatte 5 des Kanals 2 in Verbindung kommt, während der andere Bereich 21 mit der anderen Deckplatte 7 der Verbundplatte 5 verbunden wird. Damit der Adapter 19 und somit der Träger 13 in der Öffnung 11 gehalten wird, ist am Bereich 20 des Adapters 19 ein Haltenocken 22 angebracht. Durch diesen Adapter 19 wird der Strom in die beiden Deckplatten 16 und 17 geleitet, welche den Strom somit in ein Kupplungsstück 23 leiten, das am anderen Ende 24 des Trägers 13 aufgesteckt ist. An diesem Kupplungsstück 23 ist in bekannter Weise ein Beleuchtungskörper 25 angebracht. Hierbei ist das Kupplungsstück 23 so ausgebildet, dass die Deckplatte 16 und die Deckplatte 17 jeweils mit diesem Beleuchtungskörper 25 elektrisch verbunden werden, so dass bei Stromfluss dieser Beleuchtungskörper 25 leuchtet.

Zum Einsetzen dieses Trägers 13 in eine Öffnung 11 des Kanals 2 wird dieser Träger 13 so gehalten, dass der Adapter 19 praktisch senkrecht in die Öffnung 11 eingeführt werden kann. Nach dem Einführen des Trägers 13 in die Öffnung 11 und beim Loslassen verkantet sich der Träger 13, so dass der eine Bereich 20 des Adapters 19 elektrisch mit der Deckplatte 8 verbunden wird, während der andere Bereich 21 des Adapters 19 mit der Deckplatte 7 elektrisch verbunden wird. Dadurch kann der Stromkreis mit dem Beleuchtungskörper 25 geschlossen werden. Um ein Herausrutschen des Trägers 13 aus der Öffnung 11 zu vermeiden, ist der Haltenocken 22 am Adapter 19 angebracht, der sich innenseitig auf den Grundkörper 3, oder falls die Öffnung ausserhalb des Grundkörperbereichs angebracht ist, auf der Deckplatte 8 abstützt.

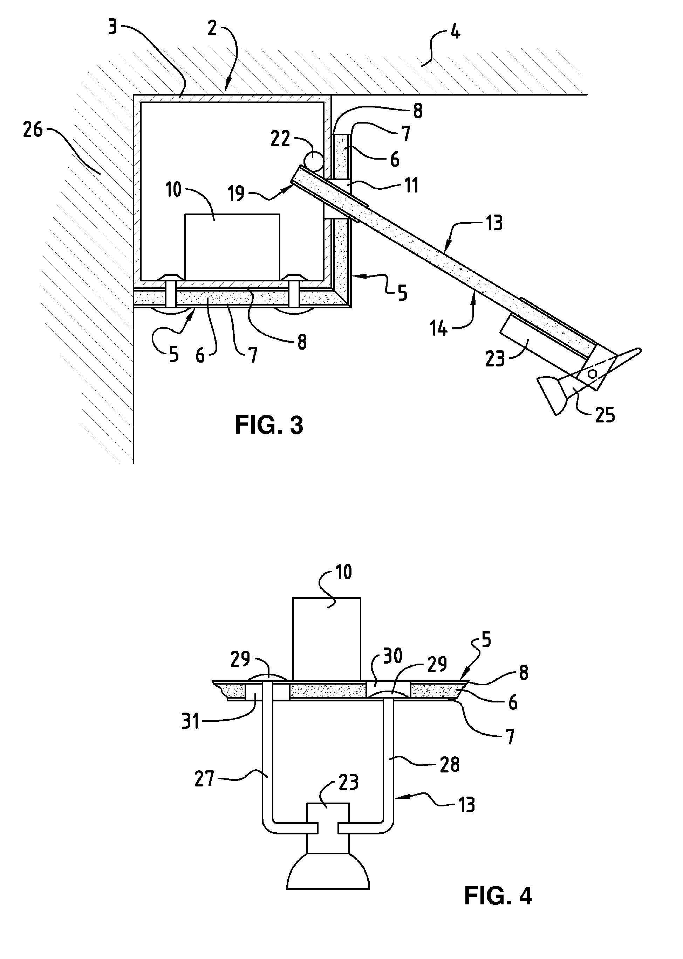

Das Ausführungsbeispiel gemäss Figur 3 zeigt einen Kanal 2, der wiederum aus einem Grundkörper 3 besteht, an welchem Verbundplatten 5 angebracht sind, und welche mit Öffnungen 11 versehen sind. Hierbei ist der Grundkörper 3 in einer Ecke zwischen Decke 4 und Wand 26 befestigt. Die Stromzuführung zu den Deckplatten 7 und 8 der Verbundplatten 5 erfolgt wiederum über einen Transformator 10, der innerhalb des Kanals 2 untergebracht ist. In die Öffnung 11 ist ein Träger 13 eingesetzt, der ebenfalls aus einem Verbundplattenstück 14 ausgestattet ist, wie dies zu Figur 1 beschrieben worden ist, aber in diesem vorliegenden Beispiel nicht gebogen ist. Im in die Öffnung 11 einsteckbaren Bereich des Trägers ist wiederum ein Adapter 19 vorgesehen, der in gleicher Weise aufgebaut ist, wie der Adapter, der im Ausführungsbeispiel gemäss Figur 1 beschrieben worden ist. Am anderen Endbereich des Trägers 13 ist ebenfalls ein Kupplungsstück 23 aufgesetzt, das gleich ausgebildet ist, wie dasjenige im Ausführungsbeispiel gemäss Figur 1 und das entsprechend mit einem Beleuchtungskörper 25 versehen ist. Die Stromübertragung vom Kanal 2 in den Beleuchtungskörper 25 erfolgt ebenfalls in entsprechender Weise zum Ausführungsbeispiel gemäss Figur 1.

Eine andere Ausführungsform ist in Figur 4 dargestellt. Hier ist wiederum eine Verbundplatte 5 ersichtlich, bestehend aus Kernplatte 6 und Deckplatten 7 und 8. Die Deckplatten 7 und 8 sind in bekannter Weise mit dem Transformator 10 elektrisch verbunden. Der Träger 13 besteht hierbei aus zwei Bügeln 27 und 28, die jeweils mit einem Kopf 29 ausgestattet sind. Die Bügel 27 und 28 sind in ein Kupplungsstück 23 einsteckbar, welches den Beleuchtungskörper 25 trägt. Die Öffnungen 30 und 31 in der Verbundplatte 5 sind so ausgestaltet, dass jeweils ein Teil der Deckplatten 7 bzw. 8 die Öffnungen 30 bzw. 31 teilweise überdecken. In diesen Überdeckungsbereichen sind in den Deckplatten 7 und 8 schlitzförmige Einbuchtungen angebracht, so dass die Bügel 27 und 28 in diese Einbuchtungen gelangen und sich die Köpfe 29 auf den Deckplatten 7 bzw. 8 abstützen können. So ist die Stromzuführung vom Transformator 10 über die Deckplatten 7 und 8 und die Bügel 27 und 28 und das Kupplungsstück 23 in den Beleuchtungskörper 25 gewährleistet.

Mit dieser Anordnung erhält man eine Beleuchtungseinrichtung, die die gewünschten ästhetischen Anforderungen erfüllt, nämlich dass keine stromführenden Kabel sichtbar sind, und dass der Transformator ebenfalls nicht sichtbar untergebracht werden kann, wobei der Aufbau dieser Beleuchtungseinrichtung sehr einfach ausgestaltet werden kann.

## Patentansprüche

1. Beleuchtungseinrichtung, umfassend einen Transformator (10), elektrische Leiter (7, 8), in welche ein eine niedrige Spannung aufweisender Strom einspeisbar ist, und welche elektrischen Leiter mit Trägern (13) verbindbar sind, an welchen Trägern (13) Beleuchtungskörper (25) angebracht sind, die mit den Trägern (13) elektrisch verbindbar sind, **dadurch gekennzeichnet, dass** die elektrischen Leiter aus Verbundplatten (5) gebildet sind, deren beide Deckplatten (7, 8) aus einem elektrisch leitenden Material bestehen und die elektrischen Leiter bilden, welche beiden Deckplatten (7, 8) auf einer elektrisch isolierenden Kernplatte (6) aufgebracht sind, und dass die Verbundplatten (5, 9) zu einem Kanal (2) zusammengesetzt sind, welcher an Decken (4) und/oder Wänden (26) befestigbar ist, in welchem der Transformator (10) unterbringbar ist, und in welchem Öffnungen (11) angebracht sind, in welche die Träger (13) einsetzbar sind.

2. Beleuchtungseinrichtung nach Anspruch 1, **dadurch gekennzeichnet, dass** die Kanäle (2) jeweils einen Grundkörper (3) aufweisen, welcher aus einem elektrisch leitfähigen Material besteht, auf welchen die Verbundplatten (5, 9) aufgesetzt sind.

3. Beleuchtungseinrichtung nach Anspruch 1 oder 2, **dadurch gekennzeichnet, dass** der Grundkörper (3) aus einem Blech gebildet ist.

4. Beleuchtungseinrichtung nach einem der Ansprüche 1 bis 3, **dadurch gekennzeichnet, dass** die Öffnungen (11) in den Verbundplatten (5) längsschlitzförmige Ausnehmungen sind.

5. Beleuchtungseinrichtung nach einem der Ansprüche 1 bis 4, **dadurch gekennzeichnet, dass** die Träger (13) aus einem Verbundplattenstück (14) gebildet sind, deren eines Ende (18) mit einem Adapter (19) zum Einsetzen in die Öffnungen (11) und zum Abnehmen des Stroms versehen ist und auf deren anderes Ende (24) ein Kupplungsstück (23) aufsteckbar ist, an welchem der Beleuchtungskörper (25) angeordnet ist.

6. Beleuchtungseinrichtung nach Anspruch 5, **dadurch gekennzeichnet, dass** am Adapter (19) ein Haltenocken (22) angebracht ist.

7. Beleuchtungseinrichtung nach Anspruch 5 oder 6, **dadurch gekennzeichnet, dass** das Verbundplattenstück (14) biegbar ist.

8. Beleuchtungseinrichtung nach einem der Ansprüche 1 bis 7, **dadurch gekennzeichnet, dass** die Verbundplatten (5) und die Verbundplattenstücke (14) eine Kernplatte (6) bzw. ein Kernplattenstück (15) aus Polyäthylen und Deckplatten (7, 8; 16, 17) aus einer Aluminiumlegierung umfassen.
